# EUROPÄISCHE PATENTSCHRIFT

(11) **EP 3 704 080 B1**
(45) Veröffentlichungstag und Bekanntmachung des Hinweises auf die Patenterteilung: **24.07.2024**
(21) Anmeldenummer: 18808209.3
(22) Anmeldetag: 18.10.2018
(51) Int. Cl.: C05D 1/04, C05D 3/00, C05D 5/00, C05D 9/02

(54) **VERFAHREN ZUR HERSTELLUNG KALZINIERT-POLYHALITHALTIGER DÜNGEMITTELGRANULATE**
PROCESS FOR PREPARING CALCINED POLYHALITE-CONTAINING FERTILIZER GRANULES
PROCEDÉ POUR LA PRODUCTION DE GRANULÉS D'ENGRAIS CONTENANT DE LA POLYHALITE CALCINÉE

(30) Priorität: 30.10.2017 DE 102017010085
(43) Veröffentlichungstag der Anmeldung: 09.09.2020
(73) Patentinhaber: K+S Aktiengesellschaft, 34131 Kassel (DE)
(72) Erfinder: Kopf, Sebastian, 36433 Bad Salzungen (DE); Dietrich, Armin, 37299 Weissenborn (DE); Keßler, Alexander, 36266 Heringen (DE); Baucke, Guido, 36277 Schenklengsfeld OT Wippershain (DE)
(74) Vertreter: Meissner Bolte Partnerschaft mbB
(86) Internationale Anmeldenummer: PCT/DE2018/000297
(87) Internationale Veröffentlichungsnummer: WO 2019/086063

(56) Entgegenhaltungen:
- DE-A1- 102012 016 992
- DE-A1- 102014 014 100
- DE-A1- 2 810 640
- US-B2- 8 551 429

## Beschreibung

Die vorliegende Erfindung betrifft ein Verfahren zur Herstellung von Kalium, Magnesium, Calcium und Sulfat enthaltenden Düngemittelgranulaten, umfassend eine Pressagglomeration eines feinteiligen Pressguts, das kalziniertes Polyhalit enthält.

Polyhalit ist ein Mineral aus der Klasse der Sulfate und weist folgende chemische Zusammensetzung auf: K₂Ca₂Mg[SO₄]₄·2H₂O. Polyhalit kristallisiert triklin in der Raumgruppe P1 (Raumgruppen-Nr. 2) mit den Gitterparametern *a* = 11.689 Ä; *b* = 16.332 Ä; *c* = 7,598 Ä; α = 91.65°; β = 90,0° und γ = 91,9° sowie vier Formeleinheiten pro Elementarzelle (Handbook of Mineralogy Vol. V - Polyhalite, 2003, The Mineralogical Society of America). Größere Vorkommen an Polyhalit findet man in Europa unter anderem in Österreich, Deutschland und Großbritannien sowie außerhalb Europas in den USA, China, Indien, Ukraine, Türkei und Iran.

Aufgrund der Kombination der Pflanzennährstoffe Kalium, Magnesium und Schwefel in Form des Sulfats ist Polyhalit als Mineraldünger geeignet und wirkt sich vorteilhaft auf verschiedene Qualitätskriterien und die Vitalität der damit gedüngten Kulturen aus. Als Düngemittel wird Polyhalit vornehmlich in Form von Produkten mit Korngrößen im Bereich von 2 bis 5 mm angeboten, beispielsweise als Rollagglomerate oder als ein durch mechanisches Zerkleinern von bergmännisch abgebautem Polyhalit hergestelltes Produkt. Beim Zerkleinern des bergmännisch abgebauten Polyhalits fallen größere Mengen an feinteiligem Polyhalit an, bei dem in der Regel wenigstens 80 Gew.-%, insbesondere wenigstens 90 Gew.-% der Polyhalit-Partikel Korngrößen von maximal 2 mm, insbesondere von maximal 1,5 mm aufweisen. Dieses feinteilige Polyhalit ist als Düngemittel weniger geeignet, da es nicht zuletzt aufgrund der geringen Korngröße schwierig zu handhaben ist.

Es besteht daher grundsätzlich ein Bedarf an einem Verfahren, das die Weiterverarbeitung größerer Mengen feinteiligen Polyhalits zu Düngemittelgranulaten erlaubt. Leider ist die Duktilität des Polyhalit gering, so dass eine Pressgranulierung bzw. Pressagglomeration des feinteiligen Polyhalits nicht zu mechanisch stabilen Granulaten führt.

Die DE102013004597 beschreibt ein Verfahren zur Herstellung von Granulaten aus nicht duktilen, sulfatischen Salzen wie Polyhalit oder Langbeinit, bei dem man eine Mischung des feinteiligen Salzes mit einer größeren Menge eines zähflüssigen, zuckerhaltigen Abfallprodukts der Rohr- oder Rübenzuckerherstellung einer Pressgranulierung unterwirft. Hierbei wird die Mischung zunächst zu Schülpen verpresst, die man vor der Zerkleinerung zum fertigen Granulat mehrere Stunden reifen lassen muss, da die Schülpen anfänglich noch sehr weich sind. Die erreichten Festigkeiten sind nicht zufriedenstellend. Zudem erfordert das Verfahren aufgrund der Reifungsphase einen höheren apparativen Aufwand, da die Schülpen nicht direkt weiterverarbeitet werden können sondern zwischengelagert werden müssen.

US 2017/0137333 beschreibt die Herstellung von Polyhalit-Granulaten aus feinteiligem Polyhalit, bei dem man das feinteilige Polyhalit zunächst mit einem Bindemittel, vorzugsweise mit vorgequollener Stärke, vermischt und anschließend mit einem Mischer mit etwa 5 Gew.-% Wasser besprüht, um ein voragglomeriertes Produkt zu erhalten. Dieses voragglomerierte Produkt wird auf einem Pelletier-Teller unter Zusatz von weiterem Wasser zu einem Agglomerat weiterverarbeitet. Das Verfahren ist im Vergleich zu einer Pressagglomeration apparativ aufwändig. Zudem erfordert der vergleichsweise große Einsatz an Wasser einen hohen Energieaufwand für die Trocknung der Granulate.

Die US 8,551,429 beschreibt ein durch Kalzinierung von bergmännisch abgebautem Polyhalit erhaltenes Salzgemisch (kalziniertes Polyhalit). Beim Kalzinieren verliert das Polyhalit das gebundene Kristallwasser und seine Kristallstruktur verändert sich. Zudem ändert sich das Lösungsverhalten. Während sich nicht kalziniertes Polyhalit in Wasser nur langsam löst, enthält kalziniertes Polyhalit Bestandteile die sich rasch in Wasser lösen. Im Übrigen sind in kalziniertem Polyhalit die relativen Mengenanteile der Elemente K, Ca, Mg und S, letzteres in Form von Sulfat, denen des Polyhalits vergleichbar. Dementsprechend wird in US 8,551,429 kalziniertes Polyhalit zur Gewinnung von Kaliumsulfat vorgeschlagen. Bei dem Verfahren fallen größere Mengen an unlöslichen Calciumsalzen an, die entsorgt werden müssen. Außerdem ist das Verfahren aufgrund des Einsatzes großer Wassermengen aufwendig und unwirtschaftlich.

DE 10 2014 014100 beschreibt ein Verfahren zur Herstellung von Kaliumsulfat-Granulaten, wobei dem Kaliumsulfat während des Granulierens Kaliumchlorid in einer Menge von 0,1 bis 7,5 Gewichts-%, jeweils bezogen auf das eingesetzte Kaliumsulfat, zugesetzt wird. Vor oder während des Granuliervorgangs wird zusätzlich Wasser mit einem Anteil von 0,1 bis 2,5 Gew.-% zugegeben.

Aufgabe der vorliegenden Erfindung ist daher die Bereitstellung eines Verfahrens, das es in einfacher und effizienter Weise erlaubt, größere Mengen feinteiligen Polyhalits zu Düngemittelgranulaten mit ausreichender mechanischer Festigkeit zu verarbeiten. Insbesondere besteht Bedarf an einem Verfahren dass es erlaubt, unter Verwendung eines Polyhalit basierten Ausgangsmaterials Düngemittelgranulate herzustellen, die Kalium, Magnesium, Calcium und Sulfat enthalten.

Es wurde überraschenderweise gefunden, dass sich kalziniertes Polyhalit, sowie Salzmischungen, die kalziniertes Polyhalit in einer Menge von wenigstens 10 Gew.-% enthalten, durch Pressagglomeration zu mechanisch stabilen Granulaten verarbeiten lassen, wenn man dem Pressgut, d.h. dem kalzinierten Polyhalit bzw. der Salzmischung, Wasser in einer Menge von 0,1 bis 7 Gew.-%, insbesondere 0,5 bis 6 Gew.-% und speziell 1 bis 5 Gew.-% zusetzt. Dies überrascht, da sich Polyhalit selber auch unter Zusatz von Wasser nicht durch Pressagglomeration zu einem stabilen Granulat verarbeiten lässt und auch kalziniertes Polyhalit ohne Zusatz von Wasser durch Pressagglomeration nicht zu stabilen Düngemittelgranulaten verarbeitet werden kann. Aufgrund des Ausgangsmaterials enthält das so hergestellte Düngemittelgranulat Kalium, Magnesium, Calcium und Sulfat.

Dementsprechend betrifft die vorliegende Erfindung ein Verfahren zur Herstellung Kalium, Magnesium, Calcium und Sulfat enthaltender Düngemittelgranulate, umfassend eine Pressagglomeration eines feinteiligen Pressguts, das wenigstens 10 Gew.-% kalziniertes Polyhalit enthält, wobei man dem der Pressagglomeration zugeführten feinteiligen Pressgut 0,1 bis 7 Gew.-%, insbesondere 0,5 bis 6 Gew.-% und speziell 1 bis 5 Gew.-% Wasser, bezogen auf die Bestandteile des Pressguts, zusetzt.

Das erfindungsgemäße Verfahren erlaubt es, den bergmännisch abgebauten Polyhalit in Form seines Kalzinierungsprodukts in einfacher Weise zu Düngemittelgranulaten zu verarbeiten, ohne dass aufwändige Lösungs- bzw. Extraktionsverfahren notwendig sind. Die nach dem erfindungsgemäßen Verfahren erhältlichen Granulate zeichnen sich zudem durch gute mechanische Festigkeit, insbesondere hohe Bruchfestigkeitswerte und geringe Abriebwerte aus.

Der Begriff "Pressgut" bezeichnet hier und im Folgenden das Substrat, welches der Pressagglomeration zugeführt wird. Hierbei handelt es sich um ein feinteiliges anorganisches Salz, bzw. um ein Gemisch von anorganischen Salzen, das zu wenigstens 10 Gew.-%, insbesondere zu wenigstens 20 Gew.-% aus kalziniertem Polyhalit besteht und bis zu 90 Gew.-%, vorzugsweise nicht mehr als 80 Gew.-% eines oder mehrere, von kalziniertem Polyhalit verschiedene anorganische Salze enthält. Die hier angegebenen Angaben in Gew.-% beziehen sich auf die Gesamtmasse der vom zugesetzten Wasser verschiedenen Bestandteile des der Pressagglomeration zugeführten Substrats. Bei den weiteren, von kalziniertem Polyhalit verschiedenen Salzen handelt es sich typischerweise um Salze, wie man sie in Düngemitteln einsetzt, insbesondere um Sulfate und Chloride des Kaliums oder Magnesiums, einschließlich Mischsalze davon.

Unter dem Begriff "feinteilig" in Bezug auf Pressgut versteht man ein für die Herstellung von Granulaten übliches Kornband, bei dem typischerweise wenigstens 80 Gew.-%, insbesondere wenigstens 90 Gew.-% der Salzkörner im Pressgut eine Korngröße von maximal 2 mm, insbesondere maximal 1,5 mm und speziell maximal 1,2 mm aufweisen und vorzugsweise Korngrößen im Bereich von 0,01 bis 2 mm, insbesondere im Bereich von 0,1 bis 1,5 mm, und speziell im Bereich von 0,2 bis 1,2 mm, bestimmt mittels Siebanalyse nach DIN 66165:2016-08, aufweisen. Die mittlere Korngröße (Gewichtsmittel, d₅₀-Wert) der Salzkörner des Pressguts liegt typischerweise im Bereich von 50 µm bis 1500 µm, insbesondere im Bereich von 100 µm bis 1200 µm. Der d₉₀-Wert des im erfindungsgemäßen Verfahren eingesetzten Pressguts liegt in der Regel bei maximal 2 mm, insbesondere maximal 1,5 mm und speziell maximal 1,2 mm.

Bei den hier und im Folgenden angegebenen Korngrößen handelt es sich in der Regel um diejenigen Werte, wie sie mittels Siebanalyse nach DIN 66165:2016-08 bestimmt werden. Die Ermittlung der Massenanteile der jeweiligen Korngrößen bzw. Korngrößenbereiche erfolgt nach Maßgabe der DIN 66165:2016-08 durch Fraktionierung des dispersen Guts unter Verwendung von mehreren Sieben mittels maschineller Siebung in vorkalibrierten Systemen. Sofern nichts anderes angegeben ist, sind Prozentangaben im Zusammenhang mit Teilchen- bzw. Korngrößen als Angaben in Gew.-% zu verstehen. In diesem Zusammenhang bezeichnet der d₉₀-Wert diejenige Korngröße, die von 90 Gew.-% der Salzkörner unterschritten wird. Der d₁₀-Wert bezeichnet diejenige Korngröße, die von 10 Gew.-% der Salzkörner unterschritten wird. Der d₅₀-Wert bezeichnet die gewichtsmittlere Korngröße. Die Korngrößenverteilung kann auch durch Laserlichtstreuung (Laserlichtbeugung), beispielsweise nach der in ISO 13320:2009 angegebenen Methode, bestimmt werden, insbesondere im Falle sehr kleiner Partikel mit Partikelgrößen < 200 µm.

Unter "kalziniertem Polyhalit" versteht man ein sulfatisches Salz bzw. Salzgemisch, das durch Kalzinierung von Polyhalit erhalten wird. Das kalzinierte Polyhalit ist auf dem Markt erhältlich oder kann in an sich bekannter Weise durch Kalzinierung von Polyhalit erhalten werden. Üblicherweise erfolgt eine solche Kalzinierung bei Temperaturen von wenigstens 440°C, insbesondere wenigstens 460°C und speziell wenigstens 480°C, z.B. bei Temperaturen im Bereich von 440°C bis 560°C, insbesondere im Bereich von 460 bis 540°C und speziell im Bereich von 480 bis 520°C. Die Kalzinierung wird üblicherweise so lange durchgeführt, bis das das erhaltene Material einen Glühverlust, bestimmt durch Glühverlust bei 550°C nach DIN 18128:2002-12, von nicht mehr als 0,2 Gew.-%, insbesondere nicht mehr als 0,1 Gew.-% aufweist. Die Kalzinierungsdauer hängt naturgemäß von der Feinheit des eingesetzten Polyhalits, der Temperatur und der Art der Kalzinierungsvorrichtung ab und kann vom Fachmann durch Routineversuche ermittelt werden. Üblicherweise liegt die Kalzinierungsdauer im Bereich von 1 bis 60 Minuten, speziell im Bereich von 10 bis 20 Minuten. Geeignete Vorrichtungen für die Kalzinierung sind u.a. Drehrohröfen, Wirbelschichtöfen und Muffelöfen .

Unter Polyhalit versteht man ein Mineral, das einen Gehalt an kristallinem K₂Ca₂Mg[SO₄]₄·2H₂O von in der Regel wenigstens 85 Gew.-%, insbesondere wenigstens 90 Gew.-% aufweist. Neben dem kristallinen K₂Ca₂Mg[SO₄]₄·2H₂O kann Polyhalit auch in untergeordnetem Maße andere Alkali- und Erdalkalimetallsalze, insbesondere in Form der Chloride und Sulfate, enthalten. In der Regel handelt es sich bei dem für die Kalzinierung eingesetzten Polyhalit um ein Polyhalit in der auf dem Markt üblichen Qualität. Vorzugsweise ist das für die Kalzinierung eingesetzte Polyhalit ein feinteiliges Polyhalit, insbesondere ein beim Zerkleinern eines bergmännisch abgebauten Polyhalits anfallender feinteiligem Polyhalit. Bei dem Polyhalit kann es sich aber auch um Rückgut aus einer Herstellung eines polyhalithaltigen Granulats handeln.

Das für die Kalzinierung eingesetzte Polyhalit weist ein Kornband auf, bei dem typischerweise wenigstens 80 Gew.-%, insbesondere wenigstens 90 Gew.-% der Salzkörner Polyhalits eine Korngröße von maximal 2 mm, insbesondere maximal 1,5 mm und speziell maximal 1,2 mm aufweisen und vorzugsweise Korngrößen im Bereich von 0,01 bis 2 mm, insbesondere im Bereich von 0,1 bis 1,5 mm, und speziell im Bereich von 0,2 bis 1,2 mm, bestimmt mittels Siebanalyse nach DIN 66165:2016-08, aufweisen. Die mittlere Korngröße (Gewichtsmittel, d₅₀-Wert) des Polyhalits liegt typischerweise im Bereich von 50 µm bis 1500 µm, insbesondere im Bereich von 100 µm bis 1200 µm. Der d₉₀-Wert des Polyhalits liegt in der Regel bei maximal 2 mm, insbesondere maximal 1,5 mm und speziell maximal 1,2 mm.

Typischerweise wird ein für die Kalzinierung eingesetztes Polyhalit etwa folgende Zusammensetzung aufweisen:
Kalium: 11,0 bis 13,0 Gew.-%;
Magnesium: 3,4 bis 4,3 Gew.-%;
Calcium: 11,0 bis 13,5 Gew.-%;
Sulfat: 55,0 bis 64,0 Gew.-%; sowie
gegebenenfalls Natrium: < 2 Gew.-%;
gegebenenfalls Halogen, z.B. Chlorid: < 5 Gew.-%

Außerdem enthält das Polyhalit Kristallwasser, typischerweise in Mengen von 5,0 bis 7,0 Gew.-%. Der Kristallwassergehalt kann über den Glühverlust bei 550°C bestimmt werden. Die Restfeuchte des Polyhalits, bedingt durch anhaftende Feuchtigkeit wird in der Regel 0,5 Gew.-%, bezogen auf das Polyhalit, nicht überschreiten und liegt typischerweise im Bereich von 0,1 bis 0,4 Gew.-%. Der Trocknungsverlust wird typischerweise in Anlehnung an DIN EN 12880:2000 bestimmt, indem man eine Probe des Polyhalits bei Temperaturen im Bereich von 105 ± 5 °C bei Umgebungsdruck bis zur Gewichtskonstanz trocknet.

Da sich das kalzinierte Polyhalit in seiner Zusammensetzung von dem zur Kalzinierung eingesetztem Polyhalit im Wesentlichen nur durch den Verlust von Kristallwasser unterscheidet, weist es dementsprechend typischerweise etwa folgende Zusammensetzung auf:
Kalium: 11,8 bis 14,0 Gew.-%;
Magnesium: 3,6 bis 4,6 Gew.-%;
Calcium: 11,8 bis 14,6 Gew.-%;
Sulfat: 59,0 bis 69,0 Gew.-%;
gegebenenfalls Natrium: < 2,5 Gew.-%;
gegebenenfalls Halogen, z.B. Chlorid: < 6 Gew.-%

Das kalzinierte Polyhalit weist in der Regel ein Kornband auf, das dem für die Kalzinierung eingesetzten Polyhalits vergleichbar ist. Dementsprechend weisen typischerweise wenigstens 80 Gew.-%, insbesondere wenigstens 90 Gew.-% der Salzkörner des kalzinierten Polyhalits eine Korngröße von maximal 2 mm, insbesondere maximal 1,5 mm und speziell maximal 1,2 mm auf und vorzugsweise Korngrößen im Bereich von 0,01 bis 2 mm, insbesondere im Bereich von 0,1 bis 1,5 mm, und speziell im Bereich von 0,2 bis 1,2 mm, bestimmt mittels Siebanalyse nach DIN 66165:2016-08. Die mittlere Korngröße (Gewichtsmittel, d₅₀-Wert) des kalzinierten Polyhalits liegt typischerweise im Bereich von 50 µm bis 1500 µm, insbesondere im Bereich von 100 µm bis 1200 µm. Der d₉₀-Wert des kalzinierten Polyhalits liegt in der Regel bei maximal 2 mm, insbesondere maximal 1,5 mm und speziell maximal 1,2 mm.

Die Herstellung der polyhalithaltigen Düngemittelgranulate umfasst erfindungsgemäß eine Pressagglomeration eines mit Wasser befeuchteten Pressguts. Erfindungsgemäß besteht das Pressgut zu wenigstens 10 Gew.-%, insbesondere zu wenigstens 20 Gew.-% aus kalziniertem Polyhalit. Die hier und im Folgenden, in Bezug auf die Zusammensetzung des Pressguts angegebenen Angaben in Gew.-% beziehen sich auf die Gesamtmasse der vom zugesetzten Wasser verschiedenen Bestandteile des Pressguts.

Insbesondere besteht das Pressgut zu wenigstens 80 Gew.-% und bevorzugt wenigsten 90 Gew.-% aus einem oder mehreren anorganischen Salzen, die ausgewählt sind unter kalziniertem Polyhalit, und Mischungen aus kalziniertem Polyhalit mit wenigstens einem weiteren Salz, das unter Sulfaten und Chloriden des Kaliums oder Magnesiums ausgewählt ist und das insbesondere unter Kaliumchlorid, Natriumchlorid, Natriumsulfat, Kaliumsulfat, Magnesiumsulfat und dessen Hydraten wie das Monohydrat (Kieserit) oder das Heptahydrat (Bittersalz bzw. Epsomit), Langbeinit, d.h. K₂Mg₂[SO₄]₃, und Polyhalit, d.h. nicht kalziniertes Polyhalit, und deren Mischungen ausgewählt ist.

Außerdem kann das Pressgut salzartige Mikronährstoffe, wie sie häufig in Düngemitteln verwendet werden, zugesetzt werden. Zu den salzartigen Mikronährstoffen zählen salzartige Borverbindungen sowie Salze und Komplexverbindungen der Elemente Mangan, Zink, Kupfer, Eisen und Molybdän. Mangan, Kupfer und Zink werden dabei vorzugsweise in Form ihrer Sulfate eingesetzt. Kupfer und Eisen werden vorzugsweise auch in Form von Chelaten, z. B. mit EDTA, eingesetzt. Bor wird vorzugsweise als Calcium-Natrium-Borat, z. B. in Form von Ulexit, Natriumborat, Kaliumborat oder Borsäure eingesetzt. Molybdän wird vorzugsweise als Natrium- oder Ammoniummolybdat oder als Mischung davon eingesetzt. Typischerweise wird der Anteil an von Bor verschiedenen Mikronährstoffen, gerechnet in ihrer elementaren Form, 1 Gew.-%, bezogen auf die Gesamtmasse der Salzmischung, nicht überschreiten. Der Gehalt an Bor, gerechnet als B₂O₃ wird in der Regel 3 Gew.-% nicht überschreiten und liegt typischerweise, sofern enthalten, im Bereich von 0,01 bis 3 Gew.-%, insbesondere 0,01 bis 2 Gew.-%, bezogen auf die Gesamtmasse der von zugesetztem Wasser verschiedenen Bestandteile des Pressguts.

Weiterhin kann das Pressgut etwaige Verunreinigungen enthalten, die im eingesetzten, kalzinierten Polyhalit und den weiteren Salzen enthalten sind. Hierzu zählen neben den bereits erwähnten sulfatischen und/oder chloridischen Natrium- und Kaliumsalzen und Magnesiumsalzen wie Kaliumsulfat, Natriumsulfat, Natriumchlorid, Magnesiumsulfate wie Kieserit und Langbeinit, MgO, MgCOs, und Calciumsulfat, einschließlich seiner Hydrate. Der Anteil der über Verunreinigungen eingeführten Salze wird in der Regel 20 Gew.-%, insbesondere 10 Gew.-% nicht überschreiten.

Weiterhin kann das zur Pressagglomeration eingesetzten Pressgut auch organische Bindemittel enthalten, beispielsweise Tylose, Melasse, Gelatine, Stärke, Ligninsulfonate oder Salze von Polycarbonsäuren wie Natriumcitrat oder Kaliumcitrat oder Fettsäuresalze wie Calciumstearat. Der Anteil der organischen Bindemittel wird typischerweise 2 Gew.-% nicht überschreiten und beträgt vorzugsweise weniger als 1 Gew.-%, jeweils bezogen auf die Gesamtmasse der von zugesetztem Wasser verschiedenen Bestandteile des Pressguts.

In einer ersten bevorzugten Ausführungsform der Erfindung besteht das Pressgut zu wenigstens 80 Gew.-%, insbesondere zu wenigstens 90 Gew.-%, bezogen auf die Gesamtmasse der von zugesetztem Wasser verschiedenen Bestandteile des Pressguts, aus kalziniertem Polyhalit. Weitere, optionale Bestandteile des in dieser Ausführungsform eingesetzten Pressguts können die zuvor genannten weiteren Salze, sowie die zuvor genannten Verunreinigungen, Mikronährstoffe und Bindemittel sein. Die Gesamtmenge der weiteren Bestandteile wird 20 Gew.-%, insbesondere 10 Gew.-%, bezogen auf die Gesamtmasse der von zugesetztem Wasser verschiedenen Bestandteile des Pressguts, nicht überschreiten.

In einer zweiten bevorzugten Ausführungsform der Erfindung besteht das Pressgut zu wenigstens 80 Gew.-%, insbesondere zu wenigstens 90 Gew.-%, bezogen auf die Gesamtmasse der von zugesetztem Wasser verschiedenen Bestandteile des Pressguts, aus einem Gemisch aus kalziniertem Polyhalit und feinteiligem Kaliumchlorid. Weitere, optionale Bestandteile des in dieser zweiten Ausführungsform eingesetzten Pressguts können die zuvor genannten weiteren Salze, sowie die zuvor genannten Verunreinigungen, Mikronährstoffe und Bindemittel sein. Die Gesamtmenge der weiteren Bestandteile wird 20 Gew.-%, insbesondere 10 Gew.-%, bezogen auf die Gesamtmasse der von zugesetztem Wasser verschiedenen Bestandteile des Pressguts, nicht überschreiten.

In dieser zweiten Ausführungsform liegt das Massenverhältnis von feinteiligem Polyhalit zu feinteiligem Kaliumchlorid im Pressgut üblicherweise im Bereich von 1 : 5 bis 4 : 1, insbesondere im Bereich von 1 : 3 bis 3 : 2. Der Massenanteil an feinteiligem Kaliumchlorid wird dabei vorzugsweise 80 Gew.-% und insbesondere 75 Gew.-%, bezogen auf die Gesamtmasse des Pressguts, nicht überschreiten, um ausreichend hohe Sulfatgehalte im Düngemittelgranulat zu gewährleisten.

Bei dem feinteiligen Kaliumchlorid kann es sich grundsätzlich um ein festes Kaliumchlorid handeln, das ein für die Herstellung von Kaliumchlorid-Granulaten übliches Kornband aufweist, wobei typischerweise wenigstens 80 Gew.-%, insbesondere wenigstens 90 Gew.-% der Kaliumchlorid-Körner eine Korngröße von maximal 2 mm, insbesondere maximal 1,5 mm und speziell maximal 1,2 mm aufweisen und vorzugsweise wenigstens 80 Gew.-%, insbesondere wenigstens 90 Gew.-% der Kaliumchlorid-Körner Korngrößen im Bereich von 0,01 bis 2 mm, insbesondere im Bereich von 0,02 bis 1,5 mm, und speziell im Bereich von 0,05 bis 1,2 mm, bestimmt mittels Siebanalyse nach DIN 66165:2016-08, aufweisen. Die mittlere Korngröße (Gewichtsmittel) des Kaliumchlorids liegt typischerweise im Bereich von 20 µm bis 1000 µm, insbesondere im Bereich von 50 µm bis 800 µm. Der d₉₀-Wert des im erfindungsgemäßen Verfahren eingesetzten Kaliumchlorids liegt in der Regel bei maximal 2 mm, insbesondere maximal 1,5 mm und speziell maximal 1,2 mm.

Für diese zweite Ausführungsform sind beliebige Kaliumchlorid-Qualitäten geeignet. Typischerweise wird ein Kaliumchlorid mit Kaliumgehalten von wenigstens 50 Gew.-%, gerechnet als K₂O, entsprechend einem Gehalt von Kaliumchlorid von wenigstens 80 Gew.-%, eingesetzt. Insbesondere weist ein solches Kaliumchlorid einen Gehalt an KCl von wenigstens 85,0 Gew.- %, z.B. im Bereich von 85,0 bis 99,9 Gew.-%, insbesondere wenigstens 90 Gew.-%, z.B. im Bereich von 90 bis 99,9 Gew.-%, jeweils bezogen auf die von Wasser verschiedenen Bestandteile des Kaliumchlorids, auf. Neben KCl kann das Kaliumchlorid auch andere, von Kaliumchlorid und Wasser verschiedene Bestandteile enthalten. Bei diesen Bestandteilen handelt es sich insbesondere um Natriumchlorid, Bromide des Natriums oder des Kaliums oder Erdalkalimetallhalogenide wie Magnesiumchlorid und Calciumchlorid und deren Oxide. Die Gesamtmenge derartiger Bestandteile wird in der Regel 20 Gew.-%, insbesondere 15 Gew.% und speziell 10 Gew.-% nicht überschreiten und liegt typischerweise im Bereich von 0,1 bis 20 Gew.-%, insbesondere im Bereich von 0,1 bis 15 Gew.-% und speziell im Bereich von 0,1 bis 10 Gew.-%.

In einer dritten bevorzugten Ausführungsform der Erfindung besteht das Pressgut zu wenigstens 80 Gew.-%, insbesondere zu wenigstens 90 Gew.-%, bezogen auf die Gesamtmasse der von zugesetztem Wasser verschiedenen Bestandteile des Pressguts, aus einem Gemisch aus kalziniertem Polyhalit und wenigstens einem feinteiligen Salz B, das ausgewählt ist unter Kaliumsulfat, Magnesiumsulfat, dessen Hydraten wie das Monohydrat (Kieserit) bzw. das synthetische Monohydrat SMS, oder das Heptahydrat (Bittersalz bzw. Epsomit), Langbeinit, d.h. K₂Mg₂[SO₄]₃, und nicht kalziniertem Polyhalit. Bevorzugt ist das Salz B ausgewählt unter Polyhalit, Magnesiumsulfat, speziell Kieserit oder SMS, Kaliumsulfat und Mischungen davon. Insbesondere ist das Salz B ausgewählt unter Polyhalit, dessen Mischungen mit Kaliumsulfat und dessen Mischungen mit Magnesiumsulfat, insbesondere mit Kieserit oder SMS. Weitere, optionale Bestandteile des in dieser dritten Ausführungsform eingesetzten Pressguts können die zuvor genannten weiteren, von Salz B verschiedenen Salze, sowie die zuvor genannten Verunreinigungen, Mikronährstoffe und Bindemittel sein. Die Gesamtmenge der weiteren Bestandteile wird 20 Gew.-%, insbesondere 10 Gew.-%, bezogen auf die Gesamtmasse der von zugesetztem Wasser verschiedenen Bestandteile des Pressguts, nicht überschreiten.

In dieser dritten Ausführungsform liegt das Massenverhältnis von feinteiligem Polyhalit zu Salz B im Pressgut üblicherweise im Bereich von 1 : 5 bis 4 : 1, insbesondere im Bereich von 1 : 3 bis 3 : 2. Der Massenanteil an feinteiligem Salz B wird dabei vorzugsweise 80 Gew.-% und insbesondere 75 Gew.-%, bezogen auf die Gesamtmasse des Pressguts, nicht überschreiten, um ausreichend hohe Festigkeiten des Düngemittelgranulats zu gewährleisten.

Vorzugsweise wird das Salz B ein für die Herstellung von Granulaten übliches Kornband aufweisen, wobei typischerweise wenigstens 80 Gew.-%, insbesondere wenigstens 90 Gew.-% der Salzkörner eine Korngröße von maximal 2 mm, insbesondere maximal 1,5 mm und speziell maximal 1,2 mm aufweisen und vorzugsweise wenigstens 80 Gew.-%, insbesondere wenigstens 90 Gew.-% der Salzkörner Korngrößen im Bereich von 0,01 bis 2 mm, insbesondere im Bereich von 0,02 bis 1,5 mm, und speziell im Bereich von 0,05 bis 1,2 mm, bestimmt mittels Siebanalyse nach DIN 66165:2016-08, aufweisen. Die mittlere Korngröße (Gewichtsmittel) des Salzes B liegt typischerweise im Bereich von 20 µm bis 1000 µm, insbesondere im Bereich von 50 µm bis 800 µm. Der d₉₀-Wert des im erfindungsgemäßen Verfahren eingesetzten Salzes B liegt in der Regel bei maximal 2 mm, insbesondere maximal 1,5 mm und speziell maximal 1,2 mm.

Für diese dritte Ausführungsform sind beliebige Qualitäten des Salzes B geeignet. Typischerweise wird eine im Handel übliche Qualität eingesetzt werden, das gegebenenfalls die für das jeweilige Salz B typischen Verunreinigungen enthält. Bei diesen Bestandteilen handelt es sich insbesondere um Alkalimetallchloride, wie Natriumchlorid und Kaliumchlorid, Bromide des Natriums oder des Kaliums oder Erdalkalimetallhalogenide wie Magnesiumchlorid und Calciumchlorid und deren Oxide, sowie Natriumsulfat und Calciumsulfat. Die Gesamtmenge derartiger Bestandteile wird in der Regel 20 Gew.-%, insbesondere 15 Gew.% und speziell 10 Gew.-% nicht überschreiten und liegt typischerweise im Bereich von 0,1 bis 20 Gew.-%, insbesondere im Bereich von 0,1 bis 15 Gew.-% und speziell im Bereich von 0,1 bis 10 Gew.-%, bezogen auf die Gesamtmasse des handelsüblichen Salzes B.

Erfindungsgemäß erfolgt die Pressagglomeration unter Zusatz von Wasser. Hierdurch wird die gewünschte Festigkeit der Granulate erreicht und der Abrieb verringert. Hierbei kann man so vorgehen, dass man das Wasser unmittelbar vor der Aufgabe des Pressguts auf die zur Pressagglomeration eingesetzte Vorrichtung, im Folgenden Presse, zugibt. Häufig wird man jedoch das Pressgut zunächst durch Zusatz von Wasser befeuchten und dann das feuchte Pressgut in der Pressagglomeration einsetzen.

Die Menge an zugesetztem Wasser beträgt 0,1 bis 7 Gew.-%, insbesondere 0,5 bis 6 Gew.-% und speziell 1 bis 5 Gew.-% Wasser, bezogen auf die festen von zugesetztem Wasser verschiedenen Bestandteile des Pressguts. Gegebenenfalls wird man bei der Zugabe des Wassers etwaige Restfeuchten des Pressguts, die auch als Trockenverlust bezeichnet werden, berücksichtigen, so dass die angegebenen Obergrenzen für die zugesetzte Wassermenge von 7 Gew.-%, bzw. 6 Gew.-% oder 5 Gew.-% auf die Gesamtmasse auf die festen Bestandteile der Salzmischung (einschließlich des gebundenen Kristallwassers) bezogen sind und die Obergrenzen das nicht gebundene Wasser (Trockenverlust) mit umfassen. Mit anderen Worten die Gesamtmenge an zugesetztem Wasser und Restfeuchte wird in der Regel 7 Gew.-%, bzw. 6 Gew.-% oder 5 Gew.-% bezogen auf die Gesamtmasse des Pressguts, nicht überschreiten.

Die Bereitstellung des feuchten Pressguts erfolgt in an sich bekannter Weise durch Vermischen der Bestandteile des Pressguts mit Wasser in den gewünschten Mengenanteilen in hierfür geeigneten Vorrichtungen. Geeignete Vorrichtungen für das Vermengen der Komponenten des Pressguts und des Wassers sind Fallmischer mit und ohne Einbauten wie Trommelmischer und Ringmischer, Schaufelmischer wie Trogmischer, Pflugschaufelmischer und Doppelwellenmischer sowie Schneckenmischer. Wenn das Pressgut neben dem kalzinierten Polyhalit weitere Bestandteile enthält, kann man auch so vorgehen, dass man das kalzinierte Polyhalit mit dem bzw. den weiteren Bestandteilen) vermischt und dann das Gemisch mit Wasser befeuchtet.

Der Zusatz des Wassers zum Pressgut kann unmittelbar vor der Pressagglomeration, z.B. unmittelbar vor der Aufgabe des Pressguts auf die Presse erfolgen. Häufig wird man jedoch das Wasser mit dem Pressgut vermischen und das Pressgut der Pressagglomeration zuführen. Das Wasser kann dem Pressgut zugegeben werden, das bereits alle für die Pressagglomeration benötigten Komponenten enthält. Man kann aber auch die Zugabe des Wassers und das Vermischen der festen Bestandteile des Pressguts kombinieren, beispielsweise indem man das Wasser während des Vermischens der festen Bestandteile zusetzt oder das Wasser in Form einer Lösung eines der festen Bestandteile, z.B. eines Mikronährstoffs oder eines Bindemittels, zusetzt. Der Zusatz des Wassers kann in an sich bekannter Weise, z.B. durch Aufsprühen auf die festen Bestandteile des Pressguts in hierfür geeigneten Vorrichtungen, z.B. in einer der oben genannten Mischvorrichtungen erfolgen.

Die eigentliche Durchführung der Pressagglomeration kann in Analogie zu den aus dem Stand der Technik bekannten Agglomerationsverfahren erfolgen, die beispielsweise in Wolfgang Pietsch, Agglomeration Processes, Wiley - VCH, 1. Auflage, 2002, in G. Heinze, Handbuch der Agglomerationstechnik, Wiley - VCH, 2000 sowie in Perry's Chemical Engineers' Handbook, 7. Auflage, McGraw-Hill, 1997, beschrieben sind. Hier und im Folgenden werden die Begriffe Pressagglomeration und Pressgranulierung synonym verwendet.

Bei der Pressagglomeration wird das feuchte Pressgut unter Anwendung von Druck kompaktiert bzw. verpresst. Je nach Art des Kompaktierens/Verpressens werden hierbei die feinteiligen Bestandteile des Pressguts zu grobstückigen Agglomeraten oder bandartigen bzw. plattenartigen Strängen agglomeriert. Anschließend erfolgt üblicherweise eine Zerkleinerung des beim Kompaktieren erhaltenen, grobteiligen Materials. Zum Kompaktieren eignen sich grundsätzlich alle die für ähnliche Zwecke bekannten Pressen, wie beispielsweise Stempel-, Strang-, Loch- und Walzenpressen.

Vorzugsweise erfolgt die Kompaktierung unter Verwendung einer Walzenpresse. Bei Walzenpressen erfolgt die Kompaktierung im Spalt zweier gegenläufig rotierender Walzen. Die Walzenoberflächen können glatt, profiliert, z. B. geriffelt, gewellt oder gewaffelt, oder mit Formmulden ausgestattet sein. Eine etwaige Profilierung der Walzenoberfläche dient vor allem der Verbesserung des Einzugsverhältnisses in den Walzenspalt. Häufig wird man Walzenpressen mit glatter oder profilierter Walzenoberfläche einsetzen. In diesem Falle ist das primäre Agglomerationsprodukt ein aus dem Walzenspalt austretender bandartiger bzw. plattenartiger Strang, der auch als Schülpe bezeichnet wird.

Die für die Kompaktierung erforderlichen Presskräfte, die üblicherweise auf die Walzenbreite bezogen und als Linienkräfte angegeben werden, liegen in der Regel im Bereich von 1 bis 75 kN/cm, insbesondere im Bereich von 20 bis 70 kN/cm und bezogen auf 1000 mm Durchmesser und einer mittleren Schülpendicke von 10 mm. In der Regel wird die Walzenpresse bei einer Walzenumfangsgeschwindigkeit im Bereich von 0,2 bis 1,6 m/s betrieben, bei z.B. Laborpressen kann die Umfangsgeschwindigkeit auch geringer sein. Üblicherweise erfolgt die Kompaktierung bei Temperaturen im Bereich von 20 bis 100 °C oder bei der Temperatur, die sich aufgrund der Einwirkung der mechanischen Kräfte auf die Salzmischung einstellt. Gegebenenfalls wird man die der Granulierung zugeführte Salzmischung auf die für die Kompaktierung gewünschte Temperatur vorwärmen bzw. hat noch Restwärme z. B. aus der Trocknung. Gegebenenfalls kann die Kompaktierung mehrstufig durchgeführt werden.

Das bei der Kompaktierung erhalten Material wird man in der Regel zur Einstellung der Partikelgröße des herzustellenden Granulates einer Zerkleinerung unterwerfen. Die Zerkleinerung kann in an sich bekannter Weise, beispielsweise durch Vermahlen in hierfür geeigneten Vorrichtungen erfolgen, beispielsweise in Prallbrechern, Prallmühlen oder Walzenbrechern.

In der Regel schließt sich dem eigentlichen Granuliervorgang, d.h. der Kompaktierung und Zerkleinerung, eine Klassierung des Granulates an. Hierbei erfolgt eine Auftrennung des Granulates in Granulate mit der spezifikationsgerechten Korngröße, kleineren Granulaten (Feinanteil bzw. Unterkorn) und gegebenenfalls gröberen Granulaten (Grobanteil bzw. Überkorn). Spezifikationsgerecht ist insbesondere ein Granulat, in dem wenigstens 90 Gew.-% der Granulatpartikel eine Partikelgröße beziehungsweise einen Partikeldurchmesser im Bereich von 1 bis 8 mm, häufig 2 bis 6 mm und insbesondere im Bereich von 2 bis 5 mm aufweisen. Die Klassierung kann nach üblichen Verfahren erfolgen, insbesondere durch Sieben.

Das bei der Klassierung anfallende, nicht spezifikationsgerechte Granulat-Material, das sogenannte Rückgut, wird in der Regel in den Prozess zurückgeführt. Das Unterkorn kann direkt in den Prozess zurückgeführt werden. Das Überkorn wird in der Regel vor der Rückführung auf eine für die Pressagglomeration geeignete Partikelgröße vermahlen oder einer anderen Anwendung zugeführt.

Das so erhaltene spezifikationsgerechte Granulat kann in an sich bekannter Weise konfektioniert, z. B. verpackt und transportiert werden.

In einer bevorzugten Ausführungsform der Erfindung wird man das bei der Pressagglomeration anfallende Granulat vor der Konfektionierung einer Nachbehandlung mit Wasser unterwerfen. Sofern das Granulat klassiert wird, kann die Nachbehandlung sowohl vor als auch nach der Klassierung durchgeführt werden. Sofern die Pressagglomeration eine Zerkleinerungsstufe umfasst, erfolgt die Nachbehandlung in der Regel nach der Zerkleinerung und vor oder im Anschluss an eine etwaige Klassierung.

Für die Nachbehandlung wird man das Granulat mit einer geringen Wassermenge befeuchten. Die Wassermenge wird in der Regel so gewählt, dass sie vom Granulat vollständig adsorbiert wird. Vorzugsweise wird man zur Nachbehandlung das Wasser in einer Menge von 0,1 bis 4,0 Gew.-%, insbesondere 0,2 bis 3,0 Gew.-%, und speziell 0,5 bis 2,5 Gew.-%, bezogen auf die Masse des fertigen, unbehandelten Granulats einsetzen. Häufig wird man die Wassermenge für die Nachbehandlung so wählen, dass die Gesamtmenge an freiem Wasser im behandelten Granulat, d.h. Wasser, das nicht als Kristallwasser gebunden vorliegt, im Bereich von 0,1 bis 7 Gew.-%, insbesondere 0,2 bis 5 Gew.-% und speziell 0,5 bis 4 Gew.-%, bezogen auf die Gesamtmasse des frisch hergestellten Granulats liegt.

Für die Nachbehandlung wird man in der Regel so vorgehen, dass man das Wasser möglichst gleichmäßig, insbesondere in fein verteilter Form, z.B. durch Aufsprühen bzw. in zerstäubter Form, auf das fertige Granulat aufbringt. Hierzu wird man üblicherweise das Wasser mittels ein oder mehrerer geeigneter Zerstäuber, z.B. feststehende oder rotierende Düsen, versprühen bzw. zerstäuben. Hierbei hat es sich als vorteilhaft erwiesen, wenn das Granulat während des Aufbringens des Wassers, insbesondere des zerstäubten Wassers, bewegt wird, um einen gleichmäßigeren Auftrag des Wassers auf die Oberfläche der Granulat-Partikel zu erzielen. Insbesondere wird man so vorgehen, dass man das Granulat in einer Relativbewegung durch einen Sprühkegel oder einen Sprühvorhang aus mehreren sich überlagernden Sprühkegeln führt. Beispielsweise kann man zum Aufbringen des Wassers so vorgehen, dass man das Granulat mittels eines Transportbands durch einen Bereich führt, in dem Wasser versprüht bzw. zerstäubt wird, beispielsweise indem man einen oder mehrere Sprühkegel oder einen oder mehrere Sprühvorhänge auf dem sich bewegenden Transportband erzeugt. Auch kann man beispielsweise am Übergabepunkt zwischen zwei Transportbändern einen Bereich, in dem Wasser versprüht bzw. zerstäubt wird, erzeugen. Hierdurch wird ein besonders gleichmäßiges Aufbringen des Wassers auf die Oberfläche der Granulat-Partikel erreicht. Grundsätzlich ist es auch möglich, das Wasser in Mischvorrichtungen, beispielsweise Fallmischer mit und ohne Einbauten wie Trommelmischer und Ringmischer, Schaufelmischer wie Trogmischer, Pflugschaufelmischer und Doppelwellenmischer, auf die Oberfläche der Granulat-Partikel aufzubringen. Vorzugsweise wird man beim Aufbringen des Wassers die mechanische Beanspruchung des Granulats möglichst gering halten.

Das für das Pressen und/oder für die Nachbehandlung des Granulats verwendete Wasser kann grundsätzlich reines, z.B. entionisiertes Wasser, aber auch Leitungswasser oder Prozesswasser sein.

Gegebenenfalls kann sich der Nachbehandlung ein Trocknungsschritt und evtl. ein Kühlungsschritt anschließen, beispielsweise, indem man einen Gasstrom, z.B. Frischluft, durch das Granulat leitet oder durch Wärmezufuhr oder durch eine Kombination dieser Maßnahmen.

Die nach dem erfindungsgemäßen Verfahren erhältlichen Granulate zeichnen sich durch eine für Düngemittelgranulate ausreichende Festigkeit und damit durch eine geringere Empfindlichkeit gegenüber mechanischer Belastung aus, wie sie beispielsweise beim Ein- oder Ausspeichern oder beim Umschlagen oder Transportieren der Granulate auftreten. Dies äußert sich in einer geringeren Kornzerstörung und einer geringeren Staubbildung durch Abrieb, d.h. von Partikeln mit Korngrößen unterhalb 1 mm. Daher neigen erfindungsgemäß erhaltene Granulate bei der Lagerung, insbesondere unter Druck, wie er in Haufwerken oder bei der Lagerung in Silos auftritt, in geringerem Ausmaß zum Verbacken. Überraschenderweise bleibt die verbesserte mechanische Festigkeit der Granulate auch bei Lagerung über längere Zeiträume erhalten, so dass die beim Ausspeichern bzw. beim Umschlag auftretenden mechanischen Belastungen bei den erfindungsgemäß erhaltenen Granulaten auch nach längerer Lagerung zu einer geringeren Kornzerstörung führen.

Die erfindungsgemäß erhältlichen Granulate sind daher nicht nur aufgrund ihrer Bestandteile, insbesondere aufgrund der gleichzeigen Anwesenheit von Kalium, Magnesium und Sulfat, sondern auch aufgrund ihrer mechanischen Festigkeit als Düngemittel geeignet. Dementsprechend können die erfindungsgemäß erhältlichen Granulate insbesondere in den für Kalium-haltige Düngemittel üblichen Düngemittelanwendungen eingesetzt werden.

Die folgenden Beispiele dienen der Erläuterung der Erfindung.

Abkürzungen:
BF: Bruchfestigkeit/Berstfeste
Bsp.: Beispiel
Calc. Poly: kalziniertes Polyhalit
GT: Gewichtsteile
n.b.: nicht bestimmt

Die Bestimmung der Korngrößenverteilung erfolgte auf einer analytischen Vibrationssiebmaschine (Typ Retsch AS 200 control).

Der Trockenverlust TV wurde in Anlehnung an DIN EN 12880:2000 bestimmt, indem man eine Probe von etwa 30 g in einem Trockenschrank bei Temperaturen im Bereich von 105 ± 5 °C bei Umgebungsdruck 2 h trocknete und das Gewicht der Probe vor und nach der Trocknung bestimmte.

Der Glühverlust wurde in Anlehnung an DIN 15935:2012 bestimmt, indem man eine Probe von etwa 2000 g in einem Muffelofen bei Temperaturen im Bereich von 550 ± 25 °C bei Umgebungsdruck 2 h glühte und das Gewicht der Probe vor und nach dem Glühen bestimmte. Hierbei wurde von einem Feststoff ausgegangen, so dass der Trocknungsverlust eines Schlammes keine Rolle mehr spielt.

Die Berstfeste bzw. Bruchfestigkeit wurde mit Hilfe des Tabletten-Bruchfestigkeitstesters Typ TBH 425D der Firma ERWEKA auf Basis von Messungen an 56 Einzelgranalien unterschiedlicher Partikelgröße (Fraktion 2,5 - 3,15 mm) ermittelt und der Mittelwert berechnet. Bestimmt wurde die Kraft, die erforderlich war, um die Granalie zwischen Stempel und Platte des Bruchfestigkeitstesters zu zerbrechen. Granalien mit einer Berstfeste > 400 N und solche mit einer Berstfeste < 10 N wurden bei der Mittelwertbildung nicht berücksichtigt.

Die Werte für den Abrieb wurden mit dem Rolltrommelverfahren nach Busch bestimmt. Hierzu wurden 50 g des Granulats mit einer Korngrößenfraktion von 2,5 - 3,15 mm zusammen mit 70 Stahlkugeln (Durchmesser 10 mm, 283 g) in eine Rolltrommel eines handelsüblichen Abriebtesters, z. B. ERWEKA, Typ TAR 20, gegeben und 10 min bei 40 U*min⁻¹ gedreht. Anschließend wurde der Inhalt der Trommel auf ein Sieb mit einer Maschenweite von 5 mm, unter dem ein Sieb mit einer Maschenweite von 0,5 mm angeordnet war, 1 min auf einer Siebmaschine (Typ Retsch AS 200 control) gesiebt. Der abgesiebte Feinanteil entspricht dem Abrieb.

Es wurden die folgenden Einsatzstoffe verwendet:

| Kalziniertes Polyhalit (calc. Poly): | |
|---|---|
| Gehalt Kalium: | 12,1 Gew.-% |
| Gehalt Magnesium: | 4,3 Gew.-% |
| Gehalt Calcium: | 13,7 Gew.-% |
| Gehalt Sulfat: | 62,2 Gew.-% |
| Gehalt Chlorid (berechnet): | 3,3 Gew.-% |
| Gehalt Natrium: | 2,3 Gew.-% |
| Das calc. Polyhalit wies circa folgende Korngrößenverteilung auf: | d₁₀: 32,2 µm, d₅₀: 499,9 µm, d₉₀: 1026 µm. |

Kaliumchlorid (KCI):
Kaliumchlorid (unbehandelt) mit folgender Spezifikation:
KCI-Gehalt von 96,8 Gew.-% (= 60,4 % K₂O).
Gesamtgehalt Ca + Mg: 0,29 Gew.-%
Trocknungsverlust bei 105°C: < 0,1 Gew.-%.
Das Kaliumchlorid wies folgende Korngrößenverteilung auf: d₁₀: 54,12 µm, d₅₀: 111,1 µm, d₉₀: 184,3 µm.

### Herstellung der Granulate:

Für die Pressagglomeration wurde eine Laborpresse der Fa. Bepex, Typ L200/50 eingesetzt, die zwei gegenläufig rotierende Walzen mit stäbchenförmigen Vertiefungen auf der Walzenoberfläche aufwies (Walzendurchmesser 200 mm, Arbeitsbreite 50 mm). Die Laborpresse wurde mit einer spezifischen Presskraft von 28 kN/cm und einer Walzendrehzahl von 6,2 U/min betrieben. Die Zufuhr der Salzmischung erfolgte mittels einer über den Presswalzen angeordneten Stopfschnecke. Die Aufgaberate an Salzmischung betrug etwa 0,5 bis 2 kg/min.

Die Zerkleinerung der beim Kompaktieren mittels der Laborpresse anfallenden Schülpen erfolgte mit einer Prallmühle der Fa. Hazemag. Die Prallmühle wies 2 Prallwerke auf und hatte einen Rotordurchmesser von 300 mm. Die Spaltweite für das vordere Prallwerk wurde auf 10 mm und für das hintere Prallwerk auf 5 mm eingestellt. Die Prallmühle wurde mit einer Umfangsgeschwindigkeit des Rotors von 15 m/s betrieben. Die Zerkleinerung erfolgte unmittelbar im Anschluss an die Herstellung der Schülpen. Der Durchsatz an Schülpen lag bei etwa 0,5 bis 2 kg/s.

Anschließend wurde das Material mit einer handelsüblichen Siebvorrichtung klassiert, die Fraktion mit Korngröße 2 - 5 mm (Produkt) abgetrennt. Die Fraktion mit Korngröße < 2 mm kann zur Aufgabe zurückgeführt werden (Feingut). Der Anteil mit Korngröße > 5 mm (Grobgut) kann aufgemahlen und ebenfalls zurückgeführt werden. Für die Bestimmung der Bruchfestigkeit bzw. Berstfeste der Granulate wurde eine Testfraktion (Testgranulat) mit einer Korngröße von 2,5 - 3,15 mm ausgesiebt.

### Beispiele 1 bis 3 und Vergleichsbeispiel V1:

Kalziniertes Polyhalit wurde zusammen mit den in Tabelle 1 angegebenen Gewichtsteilen an Wasser, bezogen auf 100 Gewichtsteile kalziniertes Polyhalit, in einen Intensivmischer gegeben und 1 min gemischt. Die Mischung wurde dann mit einer Aufgaberate von 0,5 bis 2 kg/min auf die Laborpresse gegeben und unmittelbar anschließend zerkleinert und klassiert.

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 1 zusammengestellt.

### Beispiele 4 bis 7:

Kaliumchlorid und kalziniertes Polyhalit in dem in Tabelle 1 angegebenen Massenverhältnis wurden zusammen mit den in Tabelle 1 angegebenen Gewichtsteilen an Wasser, bezogen auf 100 Gewichtsteile der Salzmischung, in einen Intensivmischer gegeben und 1 min gemischt. Die Mischung wurde dann mit einer Aufgaberate von 0,5 bis 2 kg/min auf die Laborpresse gegeben und unmittelbar anschließend zerkleinert und klassiert.

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 1 zusammengestellt.

**Tabelle 1: Verpressen mit Wasser ohne Nachbehandlung**

| | | | Wasser | Abrieb | BF | Abrieb | BF | Abrieb | BF |
|---|---|---|---|---|---|---|---|---|---|
| Bsp. | calc. Poly | KCl | GT¹⁾ | 1 d | | 7 d | | 14 d | |
| V1 | 100 | 0 | 0 | -* | -* | -* | -* | -* | -* |
| 1 | 100 | 0 | 3 | 8,0% | 46 N | 6,0% | 58 N | 6,0% | 64 N |
| 2 | 100 | 0 | 2 | 16,0% | 35 N | 13,0% | 41 N | 6,0% | 44 N |
| 3 | 100 | 0 | 4 | 2,6% | 61 N | 3,0% | 58 N | 0,5% | 75 N |
| 4 | 75 | 25 | 2 | 1,8% | 57 N | 2,8% | 62 N | 3,0% | 68 N |
| 6 | 50 | 50 | 1 | 6,0% | 55 N | 7,0% | 53 N | 6,0% | 58 N |
| 7 | 20 | 80 | 0,5 | 8,0% | 50 N | 6,0% | 58 N | 6,0% | 72 N |

| | | | | | | | | | |
|---|---|---|---|---|---|---|---|---|---|
| 1) Gewichtsteile (Gew%), bezogen auf 100 Gewichtsteile kalziniertes Polyhalit bzw. Gemisch aus kalziniertem Polyhalit und Kaliumchlorid *) keine Schülpenbildung, d.h. ist nicht kompaktierbar | | | | | | | | | |

### Beispiele 8 bis 13:

Kalziniertes Polyhalit bzw. ein Gemisch aus Kaliumchlorid und kalziniertem Polyhalit wurden in den in Tabelle 2 angegebenen Mengenanteilen nach der für die Beispiele 1 bis 7 angegebenen Vorschrift zu einem Granulat verarbeitet, mit dem Unterschied, dass man vor dem Klassieren das zerkleinerte Produkt in einem Mischbehälter unter manueller Durchmischung mit 2 Gewichtsteilen Wasser je 100 Gewichtsteile Granulat vermischte (Nachbehandlung).

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 2 zusammengestellt.

**Tabelle 2: Verpressen mit Wasser und mit Nachbehandlung (2 Gew.-% H₂O)**

| | | | Wasser | Abrieb | BF | Abrieb | BF | Abrieb | BF |
|---|---|---|---|---|---|---|---|---|---|
| Bsp. | calc. Poly | KCl | GT | 1 d | | 7 d | | 14 d | |
| V1 | 100 | 0 | 0 | -* | -* | -* | -* | -* | -* |
| 8 | 100 | 0 | 3 | 2,0% | 61 N | 2,2% | 60 N | 2,1% | 67 N |
| 9 | 100 | 0 | 2 | 1,0% | 50 N | 2,8% | 61 N | 0,4% | 60 N |
| 10 | 100 | 0 | 4 | 3,0% | 64 N | 1,8% | 67 N | 0,2% | 76 N |
| 11 | 75 | 25 | 2 | 1,2% | 70 N | 1,2% | 77 N | 1,1% | 73 N |
| 12 | 50 | 50 | 1 | 1,6% | 59 N | 1,6% | 60 N | 1,8% | 69 N |
| 13 | 20 | 80 | 0,5 | 2,1% | 61 N | 2,2% | 82 N | 2,2% | 87 N |

| | | | | | | | | | |
|---|---|---|---|---|---|---|---|---|---|
| *) keine Schülpenbildung, d.h. ist nicht kompaktierbar | | | | | | | | | |

### Beispiele 14 und 15 :

Kalziniertes Polyhalit bzw. eine Gemisch aus Kaliumchlorid und kalziniertem Polyhalit wurden in den in Tabelle 3 angegebenen Mengenanteilen nach der für die Beispiele 1 bis 7 angegebenen Vorschrift zu einem Granulat verarbeitet, mit dem Unterschied, dass man die Salzmischung vor dem Verpressen mit 0,5 Gewichtsteilen Bor (in Form von Borax) je 100 Gewichtsteile Granulat vermischte.

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 3 zusammengestellt.

**Tabelle 3: Verpressen mit Wasser und 0,5 Gew.-% Bor**

| | | | Wasser+ % Bor | Abrieb | BF | Abrieb | BF | Abrieb | BF |
|---|---|---|---|---|---|---|---|---|---|
| Bsp. | calc. Poly | KCl | GT | 1 d | | 7 d | | 14 d | |
| 14 | 100 | 0 | 2 | 14 % | 42 N | 10 % | 52 N | 10 % | 49 N |
| 15 | 20 | 80 | 0,5 | 10 % | 47 N | 9% | 47 N | 8% | 58 N |

**Tabelle 4**

| | | | | | | | | | | | |
|---|---|---|---|---|---|---|---|---|---|---|---|
| | | | | | | Abrieb | Kornhärte | Abrieb | Kornhärte | Abrieb | Kornhärte |
| Ansatz | Polysulfat | Kalziniertes Polyhalit | Kieserit | SOP | Wasser vor Pressen [Gew.-%] | 1 d | | 7 d | | 14 d | |
| D1 | 50 | 25 | 0 | 25 | 2 | 12,0% | 36 | 15,0% | 37 N | 16% | 38 N |
| D2 | 25 | 25 | 25 | 25 | 2 | 15,0% | 38 | 17,0% | 41 N | 14% | 39 N |
| D3 | 25 | 25 | 0 | 50 | 2 | 12,0% | 39 | 14,0% | 40 N | 12% | 46 N |

**Tabelle 5**

| | | | | | mit Nachbehandlung 2 % | | | | | | |
|---|---|---|---|---|---|---|---|---|---|---|---|
| | | | | | | Abrieb | Kornhärte | Abrieb | Kornhärte | Abrieb | Kornhärte |
| Ansatz | Polysulfat | Kalzinier-tes Polyhalit | Kieserit | SOP | Wasser vor Pressen [Gew.-%] | 1 d | | 7 d | | 14 d | |
| D1-w | 50 | 25 | 0 | 25 | 2 | 7,0% | 45 | 7,0% | 43 N | 7,0% | 43 N |
| D2-w | 25 | 25 | 25 | 25 | 2 | 5,0% | 51 | 5,0% | 49 N | 6,0% | 57 N |
| D3-w | 25 | 25 | 0 | 50 | 2 | 6,0% | 53 | 7% | 52 N | 7,0% | 52 N |

| | | | | | | | | | | | |
|---|---|---|---|---|---|---|---|---|---|---|---|
| SOP = Kaliumsulfat | | | | | | | | | | | |

## Patentansprüche

1. Verfahren zur Herstellung von Kalium, Magnesium, Calcium und Sulfat enthaltenden Düngemittelgranulaten, umfassend eine Pressagglomeration eines feinteiligen Pressguts, das wenigstens 10 Gew.-% kalziniertes Polyhalit enthält, wobei man dem der Pressagglomeration zugeführten feinteiligen Pressgut 0,1 bis 7 Gew.-% Wasser zusetzt.

2. Verfahren nach Anspruch 1, wobei man das der Pressagglomeration zugeführte feinteilige Pressgut mit dem Wasser gleichmäßig befeuchtet und dann das befeuchtete Pressgut der Pressagglomeration zuführt.

3. Verfahren nach einem der vorhergehenden Ansprüche, wobei wenigstens 80 Gew.-% der Partikel des der Pressagglomeration zugeführten Pressguts eine Teilchengröße von maximal 2 mm, insbesondere im Bereich von 0,1 bis 1,5 mm aufweisen.

4. Verfahren nach einem der vorhergehenden Ansprüche, wobei das kalzinierte Polyhalit erhältlich ist durch Kalzinieren eines beim Zerkleinern eines bergmännisch abgebauten Polyhalits anfallenden, feinteiligen Polyhalits.

5. Verfahren nach einem der vorhergehenden Ansprüche, wobei das der Pressagglomeration zugeführte Pressgut zu wenigstens 80 Gew.-% aus kalziniertem Polyhalit besteht.

6. Verfahren nach Anspruch 5, wobei wenigstens 80 Gew.-% der Partikel des kalzinierten Polyhalits eine Teilchengröße im Bereich von 0,01 bis 2 mm, insbesondere im Bereich von 0,1 bis 1,5 mm aufweisen.

7. Verfahren nach einem der Ansprüche 1 bis 4, wobei das der Pressagglomeration zugeführte Pressgut zu wenigstens 80 Gew.-% aus einem Gemisch aus kalziniertem Polyhalit und Kaliumchlorid besteht.

8. Verfahren nach Anspruch 7, wobei wenigstens 80 Gew.-% der Partikel des Kaliumchlorids im Pressgut eine Teilchengröße im Bereich von 0,01 bis 2 mm aufweisen.

9. Verfahren nach einem der Ansprüche 7 oder 8, wobei das feinteilige Kaliumchlorid einen Gehalt an Kalium von wenigstens 50 Gew.-%, gerechnet als K₂O, aufweist.

10. Verfahren nach einem der Ansprüche 1 bis 4, wobei das der Pressagglomeration zugeführte Pressgut zu wenigstens 80 Gew.-% aus einem Gemisch aus kalziniertem Polyhalit und wenigstens einem weiteren Salz besteht, das unter Kaliumsulfat, Magnesiumsulfat, dessen Hydraten und nicht-kalziniertem Polyhalit ausgewählt ist.

11. Verfahren nach Anspruch 10, wobei wenigstens 80 Gew.-% der Partikel des weiteren, im Pressgut enthaltenen Salzes eine Teilchengröße im Bereich von 0,01 bis 2 mm aufweisen.

12. Verfahren nach einem der vorhergehenden Ansprüche, wobei sich der Pressagglomeration eine Nachbehandlung des frisch hergestellten Granulats mit Wasser anschließt.

13. Verfahren nach Anspruch 12, wobei die für die Nachbehandlung verwendete Wassermenge im Bereich von 0,1 bis 4 Gew.-%, bezogen auf die Gesamtmasse des frisch hergestellten Granulats liegt.

14. Verfahren nach einem der Ansprüche 12 oder 13, wobei die für die Behandlung verwendete Wassermenge so gewählt wird, dass die Gesamtmenge an ungebundenem Wasser im behandelten Granulat im Bereich von 0,1 bis 7 Gew.-%, bezogen auf die Gesamtmasse des frisch hergestellten Granulats liegt.

15. Verfahren nach einem der vorhergehenden Ansprüche, wobei die Herstellung des Granulats (i) ein Verpressen des feinteiligen Pressguts mittels einer Walzenpresse, (ii) gefolgt von einer Zerkleinerung der dabei anfallenden Schülpen und (iii) eine Klassierung des beim Zerkleinern anfallenden Granulats umfasst.

16. Verfahren nach Anspruch 15, wobei man das bei der Klassierung anfallende Unterkorn in die Pressagglomeration zurückführt.

## Claims

1. Process for preparing fertilizer granules containing potassium, magnesium, calcium and sulfate, comprising press agglomeration of a finely divided pressing material which contains at least 10% by weight of calcined polyhalite, wherein 0.1% to 7% by weight of water is added to the finely divided pressing material supplied to the press agglomeration.

2. Process according to Claim 1, wherein the finely divided pressing material supplied to the press agglomeration is uniformly wetted with the water and then the wetted pressing material is supplied to the press agglomeration.

3. Process according to either of the preceding claims, wherein at least 80% by weight of the particles of the pressing material supplied to the press agglomeration have a particle size of not more than 2 mm, more particularly in the range from 0.1 to 1.5 mm.

4. Process according to any of the preceding claims, wherein the calcined polyhalite is obtainable by calcining a finely divided polyhalite obtained on comminution of a mined polyhalite.

5. Process according to any of the preceding claims, wherein at least 80% by weight of the pressing material supplied to the press agglomeration consists of calcined polyhalite.

6. Process according to Claim 5, wherein at least 80% by weight of the particles of the calcined polyhalite have a particle size in the range from 0.01 to 2 mm, more particularly in the range from 0.1 to 1.5 mm.

7. Process according to any of Claims 1 to 4, wherein at least 80% by weight of the pressing material supplied to the press agglomeration consists of a mixture of calcined polyhalite and potassium chloride.

8. Process according to Claim 7, wherein at least 80% by weight of the particles of the potassium chloride in the pressing material have a particle size in the range from 0.01 to 2 mm.

9. Process according to either of Claims 7 and 8, wherein the finely divided potassium chloride has a potassium content of at least 50% by weight, calculated as K₂O.

10. Process according to any of Claims 1 to 4, wherein at least 80% by weight of the pressing material supplied to the press agglomeration consists of a mixture of calcined polyhalite and at least one further salt, selected from potassium sulfate, magnesium sulfate, hydrates thereof, and non-calcined polyhalite.

11. Process according to Claim 10, wherein at least 80% by weight of the particles of the further salt contained in the pressing material have a particle size in the range from 0.01 to 2 mm.

12. Process according to any of the preceding claims, wherein the press agglomeration is followed by aftertreatment of the freshly prepared granules with water.

13. Process according to Claim 12, wherein the amount of water used for the aftertreatment is in the range from 0.1% to 4% by weight, based on the total mass of the freshly prepared granules.

14. Process according to either of Claims 12 and 13, wherein the amount of water used for the treatment is selected such that the total amount of unbound water in the treated granules is in the range from 0.1% to 7% by weight, based on the total mass of the freshly prepared granules.

15. Process according to any of the preceding claims, wherein the preparation of the granules comprises (i) pressing of the finely divided pressing material by means of a roll press, (ii) followed by comminution of the resultant flakes and (iii) classification of the granules obtained on comminution.

16. Process according to Claim 15, wherein the undersize obtained in the classification is returned to the press agglomeration.

## Revendications

1. Procédé pour la préparation de granulats d'engrais contenant du potassium, du magnésium, du calcium et du sulfate, comprenant une agglomération par compression d'un produit comprimé finement divisé, qui contient au moins 10% de polyhalite calcinée, le produit comprimé finement divisé introduit dans l'agglomération par compression étant additionné de 0,1 à 7% en poids d'eau.

2. Procédé selon la revendication 1, le produit comprimé finement divisé introduit dans l'agglomération par compression étant humidifié régulièrement par de l'eau et le produit comprimé humidifié étant ensuite introduit dans l'agglomération par compression.

3. Procédé selon l'une des revendications précédentes, au moins 80% en poids des particules du produit comprimé introduit dans l'agglomération par compression présentant une grosseur de particule d'au maximum 2 mm et en particulier dans la plage de 0,1 à 1,5 mm.

4. Procédé selon l'une des revendications précédentes, la polyhalite calcinée pouvant être obtenue par calcination d'une polyhalite finement divisée produite lors du broyage d'une polyhalite obtenu par extraction minière.

5. Procédé selon l'une des revendications précédentes, le produit comprimé introduit dans l'agglomération par compression étant constitué à raison d'au moins 80% en poids de polyhalite calcinée.

6. Procédé selon la revendication 5, au moins 80% en poids des particules de la polyhalite calcinée présentant une grosseur de particule dans la plage de 0,01 à 2 mm, en particulier dans la plage de 0,1 à 1,5 mm.

7. Procédé selon l'une des revendications 1 à 4, le produit comprimé introduit dans l'agglomération par compression étant constitué à raison d'au moins 80% en poids d'un mélange de polyhalite calcinée et de chlorure de potassium.

8. Procédé selon la revendication 7, au moins 80% en poids des particules du chlorure de potassium dans le produit comprimé présentant une grosseur de particule dans la plage de 0,01 à 2 mm.

9. Procédé selon l'une des revendications 7 ou 8, le chlorure de potassium finement divisé présentant une teneur en potassium d'au moins 50% en poids, calculé sous forme de K₂O.

10. Procédé selon l'une des revendications 1 à 4, le produit comprimé introduit dans l'agglomération par compression étant constitué à raison d'au moins 80% en poids d'un mélange de polyhalite calcinée et d'au moins un autre sel qui est choisi parmi le sulfate de potassium, le sulfate de magnésium, leurs hydrates et la polyhalite non calcinée.

11. Procédé selon la revendication 10, au moins 80% en poids des particules de l'autre sel, contenu dans le produit comprimé, présentant une grosseur de particule dans la plage de 0,01 à 2 mm.

12. Procédé selon l'une des revendications précédentes, l'agglomération par compression étant suivie d'un post-traitement du granulat fraîchement préparé par de l'eau.

13. Procédé selon la revendication 12, la quantité d'eau utilisée pour le post-traitement étant située dans la plage de 0,1 à 4% en poids, par rapport à la masse totale du granulat fraîchement préparé.

14. Procédé selon l'une des revendications 12 ou 13, la quantité d'eau utilisée pour le traitement étant choisie de manière telle que la quantité totale d'eau non liée dans le granulat traité se situe dans la plage de 0,1 à 7% en poids, par rapport à la masse totale du granulat fraîchement préparé.

15. Procédé selon l'une des revendications précédentes, la préparation du granulat comprenant (i) une compression du produit comprimé finement divisé au moyen d'une presse à rouleaux, suivie de (ii) un broyage des écailles ainsi produites et de (iii) une classification du granulat produit lors du broyage.

16. Procédé selon la revendication 15, les grains plus fins produits lors de la classification étant recyclés dans l'agglomération par compression.
